(19) **Europäisches Patentamt**

**European Patent Office**

**Office européen des brevets**

(11) Veröffentlichungsnummer: **0 199 360 B1**

## EUROPÄISCHE PATENTSCHRIFT

(45) Veröffentlichungstag der Patentschrift: **08.07.92**

(21) Anmeldenummer: **86105694.3**

(22) Anmeldetag: **24.04.86**

(51) Int. Cl.⁵: **F16K 5/06**, F16K 27/06

(54) **Kugelhahn in einem mit Kunststoff ausgekleideten Gehäuse.**

(30) Priorität: **26.04.85 DE 3515140**
**30.12.85 DE 3546345**

(43) Veröffentlichungstag der Anmeldung:
**29.10.86 Patentblatt 86/44**

(45) Bekanntmachung des Hinweises auf die
Patenterteilung:
**08.07.92 Patentblatt 92/28**

(84) Benannte Vertragsstaaten:
**AT BE CH DE FR GB IT LI NL SE**

(56) Entgegenhaltungen:
**DE-A- 1 679 946**
**DE-A- 3 023 230**
**US-A- 3 073 336**
**US-A- 3 227 174**
**US-A- 3 334 650**

(73) Patentinhaber: **Nemetz, Josef**
**Hegelstrasse 4c**
**W-6200 Wiesbaden(DE)**

(72) Erfinder: **Nemetz, Josef**
**Hegelstrasse 4c**
**W-6200 Wiesbaden(DE)**

(74) Vertreter: **Ouermann, Helmut, Dipl.-Ing.**
**Postfach 6145 Gustav-Freytag-Strasse 25**
**W-6200 Wiesbaden(DE)**

EP 0 199 360 B1

## Beschreibung

Die Erfindung betrifft einen Kugelhahn mit kunststoffausgekleidetem Gehäuse, wobei die Kunststoffauskleidung zumindest in etwa in Bandbreite des Dichtbereiches die zentrisch drehbar angeordnete, mit einer Schaltwelle verbundene Kugel des Kugelhahns in jeder Schaltstellung federkraftunterstützt an deren peripheren Oberfläche umschließt und gleichzeitig als Dichtung gegenüber der Kugel dient, sowie das federkraftausübende Element durch die Kunststoffauskleidung abgedeckt ist.

Derartige Kugelhähne werden insbesondere in der Getränke- und Lebensmittelindustrie benötigt, um Ablagerungen in Toträumen zu vermeiden, da sich dort Bakterien bilden können. Weiterhin werden derartige Kugelhähne in der Lackindustrie oder ähnlichen Industriezweigen eingesetzt, da bei solchen Medien insbesondere während den Stillstandszeiten in den Toträumen ein Festkleben der zurückgebliebenen Medienreste eintreten kann und sich nachher die Armatur nicht mehr oder nur unter Schwierigkeiten betätigen läßt. Auch finden derartige Kugelhähne bei aggressiven Medien ihren Einsatz, wobei dann meist die Kugel mit Schaft ebenso mit Kunststoff ummantelt ist. Hierbei dient die Auskleidung bzw. Ummantelung insbesondere dem Korrosionsschutz.

Bei Kugelhähnen mit kunststoffausgekleidetem Gehäuse in bekannter Ausführung, das heißt, wobei die Kunststoffauskleidung die Kugel zumindest in etwa der Bandbreite des Dichtbereiches in jeder Schaltstellung umschließt, sind die Dichtungen zum Absperren des Mediumdurchflusses als ein getrenntes Teil eingelegt und die Gehäusehälften oder Gehäuseteile oder das Gehäuse mit zentralem Flansch für das Einsetzen des Absperrelementes und Lagern der Schaltwelle zusammengeschraubt oder verflanscht.

Es sind auch Ausführungen bekannt, bei denen nach der Montage des Kugelhahns die Toträume zum Beispiel durch eine Vergußmasse ausgefüllt werden. Hierbei bestehen Dichtungen und Vergußmasse aus unterschiedlichen Werkstoffen.

Eine getrennte Dichtung zum Absperren des Mediumdurchflusses soll vor allem den Zweck erfüllen, daß eine entsprechende Anpreßkraft und Abdichtung gegenüber der Kugel erzielt wird. Auch sind Ausführungen bekannt, auch mit einteiligem Gehäuse, bei denen zur Abdichtung und zur Vermeidung von Toträumen Dichtschalen aus Kunststoff in das Gehäuse eingelegt sind. Hierbei ist aber das Gehäuse meist nicht ausgekleidet, und es muß für das Gehäuse bei aggressiven Medien ein entsprechend teurer Werkstoff gewählt werden.

Ein Kugelhahn der genannten Art, der aus zwei Gehäusehälften besteht und bei dem die Kunststoffauskleidung bei der Montage des Kugelhahnes in die Gehäusehälften eingelegt wird, ist aus der US-A-3 227 174 bekannt. Dort ist das jeweilige, federkraftausübende Element als elastischer O-Ring ausgebildet, der bei der Montage des Kugelhahnes in eine Ringausnehmung des jeweiligen Gehäuseteiles eingelegt wird und bei fertig montiertem Kugelhahn auf die diesen abdeckende Kunststoffauskleidung einwirkt. Ein Kugelhahn mit einem geteilten Gehäuse und eingelegter Kunststoffauskleidung sowie elastischen Dichtringen, die auf diese einwirken, ist ferner aus der US-A-3 073 336 bekannt.

Alle diese Ausführungen bedeuten eine aufwendige Fertigung für Einzelteile und Montage oder Anbringung der Vergußmasse. Weiterhin weisen die bekannten Ausführungen zur Abdichtung an der Schaltwelle Dichtmanschetten oder beispielsweise O-Ringe auf, so daß in diesem Bereich, bedingt durch die Anordnung der Dichtungen, stets Toträume bzw. Zwischenräume gebildet werden, die Ablagerungen zulassen. Dies ist bei extremen Anforderungen, wie sie beispielsweise in der Pharmazie gestellt werden, wegen möglicher Bakterienbildung nachteilig.

Es ist weiter ein Kugelhahn der genannten Art aus der DE-A-1 679 946 bekannt, wobei das Gehäuse einteilig sowie die Ventilkugel und die Schaltwelle getrennt ausgebildet sind.

Aufgabe vorliegender Erfindung ist es, einen Kugelhahn der genannten Art zu schaffen, bei dem die Kunststoffauskleidung gleichzeitig die Dichtfunktion gegenüber der Kugel übernimmt. Hierbei soll eine dosierte Anpreßkraft der Kunststoffauskleidung im Dichtbereich um Zu- und Abgangsöffnung gegenüber der Kugel gegeben sein. Die Kunststoffauskleidung soll so gestaltet sein, daß eine optimale Totraumfreiheit zwischen Kugel und Kunststoffauskleidung gegeben ist, ohne daß Dichtschalen erforderlich sind. Abgesehen hiervon soll der Kugelhahn einfach herstellbar und montierbar sein.

Eine erste Lösung sieht für einen Kugelhahn der genannten Art vor, daß das die Kugel mit Schaltwelle beinhaltende einteilige Gehäuse eine offene Seite aufweist, die nach dem Einsetzen der Kugel mit Schaltwelle mit einem Ringscheibenelement abgedeckt wird und Gehäuse, Ringscheibenelement und Kugel mit Schaltwelle über die eingespritzte oder eingepreßte Kunststoffauskleidung zu einer Einheit verbunden sind, wobei die Kunststoffauskleidung zusätzlich zur peripheren Oberfläche der Kugel auch den im Gehäuse eingeschlossenen Teil der Schaltwelle anliegend umschließt, und daß der mit Kunststoff ausgekleidete Gehäusekörper eine Zu- und Abgangsöffnung aufweist. Bei dieser Gestaltung wird die Kugel mit Schaltwelle in das einteilige Gehäuse eingelegt und mit dem Ringscheibenelement von der am Gehäuse offenen Seite abgedeckt und anschließend die Zwischenräume und Flanschdichtflächen mittels eines Werkzeuges mit Kunststoff, insbesondere mit einem Fluorkunststoff im Spritz- oder Preßverfahren ausgekleidet und zu einer Einheit verbunden. Die Auskleidung umschließt hierbei Kugel und Schaltwelle.

Eine weitere Lösung für einen Kugelhahn der genannten Art sieht vor, daß das die Kugel mit Schaltwelle beinhaltende einteilige Gehäuse eine offene Seite aufweist, die nach dem Einsetzen der Kugel mit Schaltwelle durch ein Ringscheibenelement abgedeckt wird, wobei das Gehäuse und das Ringscheibenelement getrennt mit Kunststoff ausgekleidet sind und in montiertem Zustand die Kunststoffauskleidung zusätzlich zur peripheren Oberfläche der Kugel auch den im Gehäuse eingeschlossenen Teil der Schaltwelle anliegend umschließt, und daß der Gehäusekörper eine Zu- und Abgangsöffnung aufweist. Die Gestaltung unterscheidet sich von der ersteren dadurch, daß das Gehäuse und das Ringscheibenelement getrennt ausgekleidet bzw. ummantelt und anschließend die Kugel und Schaltwelle montiert werden. Dies ist insbesondere dann von Vorteil, wenn beispielsweise eine Keramikkugel, eine Halbkugel oder eine mit Fluorkunststoff ummantelte Kugel für den Kugelhahn vorgesehen ist. Auch ist diese Bauweise günstig, aber nicht Bedingung, wenn Kugel und Schaltwelle nicht in einem Stück gefertigt sind. Das Ringscheibenelement wird bei der Montage eingepreßt, wobei an der Flanschdichtfläche im Bereich des metallischen Gehäuses der Kunststoff in einer Hinterdrehung eine Verankerung findet.

Das einteilige Gehäuse reicht zweckmäßig über die Baulänge der Einheit. Durch die flanschseitige Montage ist dann die volle axiale Festigkeit für den Kugelhahn gegeben. Die Schaltwelle selbst wird mittels bekannter Dichtwerkstoffe abgedichtet, wobei die Auskleidung zur Ausschaltung der in diesem Bereich möglichen Toträume dergestalt vorgesehen werden kann, daß sie auch entlang der Schaltwelle vorhanden ist und entlang des Abdichtbereiches der Schaltwelle eine koaxiale Aussparung zur Schaltwelle bildet, in welche ein dauerelastischer Dichtwerkstoff eingelegt und verpreßt wird.

Vorteilhaft weist das Ringscheibenelement das als ringfederartige Ansätze ausgebildete federkraftausübende Element auf, wobei die ringfederartigen Ansätze beabstandet zur Kugel und zur Zu- bzw. Abgangsöffnung des Gehäuses in Richtung Strömungsmitte in die Kunststoffauskleidung hineinragen. Mit gleicher Bedeutung können Tellerfedern vorgesehen sein, die sich mit ihrem großen Durchmesser am Gehäuse abstützen oder mit diesem formschlüssig verbunden und in die Kunststoffauskleidung eingebettet sind. Abgesehen hiervon können sowohl Ringscheibenelemente als auch Gehäuse mit ringfeder- oder tellerfederartigen Ansätzen versehen sein. Die Kunststoffauskleidung ist hierbei so gestaltet, daß sie nicht die gesamte Flanschdichtfläche einnimmt. Es verbleibt noch eine metallische Flanschdichtfläche am äußeren Durchmesser und die Flanschdichtfläche der Kunststoffauskleidung steht geringfügig gegenüber der metallischen Flanschdichtfläche vor. Bei der Montage mit dem Gegenflansch, sei es in einer Rohrleitung als Einklemmarmatur oder in sonstiger Kombination, zum Beispiel auch für einen Kugelhahn mit Gewindeanschlüssen oder ähnlich, wird die an der Flanschdichtfläche gegenüber der metallischen Flanschdichtfläche überstehende Kunststoffauskleidung zusammengedrückt, maximal jedoch nur bis diese mit der metallischen Flanschdichtfläche gleichsteht. Hierbei wird über die ringfederartigen Ansätze bzw. über die Tellerfedern eine Anpreßkraft und somit Dichtkraft gegenüber der Kugel ausgeübt. Zur besseren Dosierung dieser Anpreßkraft ist es sinnvoll, eine entsprechend abgestimmte Freisparung im Bereich der Flanschdichtfläche vorzusehen. Die ringfederartigen Ansätze bzw. Tellerfedern, die zur besseren Verankerung mit der Kunststoffauskleidung auch mit Bohrungen oder an dem freien Ende mit Schlitzen versehen sein können, verhindern einerseits ein zu starkes Wegfließen des unter Druck stehenden Kunststoffes, und andererseits bringen sie eine dosierte Anpreßkraft, insbesondere im Dichtbereich gegenüber dem Absperrelement hervor.

Anstatt der ringfederartigen Ansätze können auch komprimierbare und elastische Werkstoffe, wie zum Beispiel Reingraphit in die Kunststoffauskleidung eingebettet oder eingelegt werden. Diese komprimierbare Werkstoffeinlage muß der Spritztemperatur für die Kunststoffauskleidung standhalten. Sofern die Werkstoffeinlage nur eingelegt ist, sollte sie aber möglichst ebenso temperaturbeständig wie die Kunststoffauskleidung sein, um den Einsatzbereich optimal zu gestalten. Werden die Werkstoffeinlagen in die Kunststoffauskleidung eingebettet bzw. eingespritzt, ist es zweckmäßig, wenn diese gegen den Spritzvorgang metallisch abgeschirmt oder verfestigt werden. Bei der Ausführung, bei der die komprimierbaren, elastischen Werkstoffeinlagen mit eingespritzt sind, werden wie bei den übrigen Ausführungen bei denen das Ringscheibenelement nicht getrennt ummantelt ausgeführt ist, Gehäuse, Kugel und Schaltwelle achs- und formgerecht im Werkzeug aufgenommen und die verbleibenden Zwischenräume mit Kunststoff im Spritz- oder Preßverfahren ausgefüllt.

Die komprimierbare und elastische Werkstoffeinlage, die in der Kunststoffauskleidung eingebettet ist, kann hierbei vom Dichtbereich gegenüber der Kugel bis in etwa zum äußeren Durchmesser der Flanschdichtfläche reichen. Eine so gestaltete Werkstoffeinlage erbringt durch den Überstand der Kunststoffauskleidung an der Flanschdichtfläche im eingebauten Zustand der Armatur zum Beispiel in einer Rohrleitung einerseits eine dosierte und durch die Dauerelastizität einer geeigneten Werkstoffeinlage auch bleibende Anpreßkraft auf die Kunststoffauskleidung und somit gegen die Kugel und andererseits wirkt sie an der Flanschdichtfläche als Anpreßkraft und Rückbildungskraft für die Flanschdichfläche Die Rückbildungskraft ist im Fall des Ausbaus des Kugelhahns aus der Rohrleitung von Vorteil, da sonst bei fehlender Rückbildungskraft der Flanschdichtfläche für den Wiedereinbau eine neue Dichtung erforderlich wäre.

Es ist weiterhin vorgesehen, daß bei einer Anordnung der Werkstoffeinlage im Gehäuse statt eines Überstandes an der Flanschdichtfläche ein geringer Überstand an der zur Kugel gerichteten Seite der Kunststoffauskleidung im Bereich der Abdichtung der Kugel gegeben ist. Ober die Montage wird der Überstand durch die Kugel gegen die komprimierbare, elastische Werkstoffeinlage gedrückt, wodurch sich eine erhöhte Anpreßkraft und somit Dichtkraft gegenüber der Kugel ergibt. Selbstverständlich wäre es auch möglich, die Kunststoffauskleidung bei einer Ausführung mit Überstand in der Abdichtzone, die Kunststoffauskleidung außerhalb des Bereiches der Abdichtzone in einem geringen Abstand zur Kugel auszuführen.

In den Figuren ist die Erfindung an drei Ausführungsformen beispielsweise dargestellt, ohne auf diese beschränkt zu sein. Es zeigt:

Figur 1      einen Kugelhahn in einer Einheit, bei dem Gehäuse mit Ringscheibenelement, die ringfederartige Ansätze aufweisen, zusammen mit Kugel und Schaltwelle in einem Fertigungsvorgang ausgekleidet sind;

Figur 2      einen Kugelhahn als Einheit, bei dem Gehäuse und Ringscheibenelement vor der Montage getrennt ausgekleidet bzw. ummantelt wurden und

Figur 3      einen 3-teiligen Kugelhahn mit durchgehender Kunststoffauskleidung.

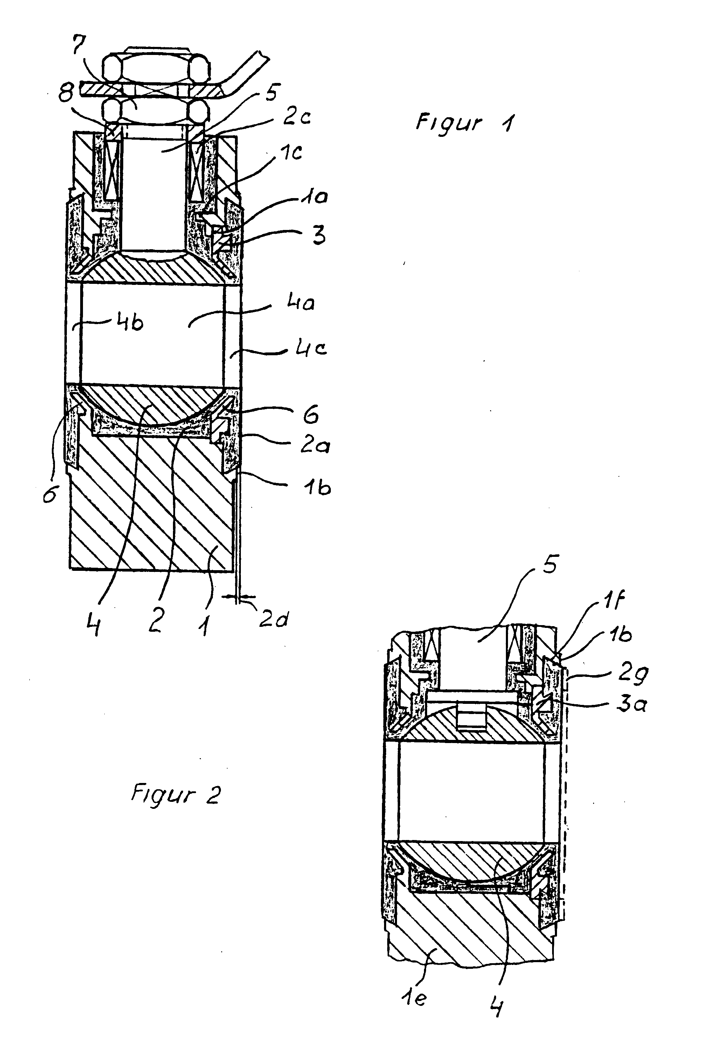

Die Figur 1 zeigt einen Kugelhahn als Baueinheit in Kurzbauweise mit Flanschanschluß. Dieser Kugelhahn kann selbstverständlich über Anbauteile zu jeder anderen Baulänge und auch Anschlußmöglichkeit ergänzt oder von vornherein in einer anderen Baulänge oder Anschlußart ausgeführt werden. Im Gehäuse 1 sind Kugel 4, welche in der Durchflußebene bzw. axial einen Durchgang 4a aufweist und Schaltwelle 5, welche mit Kugel 4 aus einem Stück bestehen aber auch zweiteilig ausgeführt sein kann, mit Ringscheibenelement 3 dergestalt angeordnet, daß sich das Ringscheibenelement 3 Metall gegen Metall an der Gehäuseschulter 1a abstützt. Hierbei sind die bei Offenstellung des Kugelhahns zwischen Gehäuse 1 mit Ringscheibenelement 3 sich gegenüber Kugel 4 mit Schaltwelle 5 ergebenden Zwischenräume mit einer Kunststoffauskleidung 2, insbesondere einer Fluorkunststoffauskleidung, versehen, die sämtliche Teile zu einer Einheit verbindet. Über den für die Kunststoffauskleidung 2 erforderlichen Spritz- bzw. Preßvorgang ist gleichzeitig die Montage des Kugelhahns bis auf die Schaltwellenabdichtung, die nur einen sehr geringen Zeitaufwand erfordert, abgeschlossen.

Die Kunststoffauskleidung 2 bzw. der nun aus Kunststoffummantelung, Gehäuse 1 und Ringscheibenelement 3 gebildete Gehäusekörper weist eine Zu- und Abgangsöffnung 4b, 4c auf. In Offenstellung des Kugelhahns verbindet der Durchgang 4a der Kugel 4, die drehbar angeordnet ist, die Zu- und Abgangsöffnung 4b, 4c. In geschlossener Stellung des Kugelhahns steht die Achse des Durchgangs 4a senkrecht zur Achse der Zu- und Abgangsöffnung 4b, 4c. Gehäuse 1 und Ringscheibenelement 3 weisen ringfederartige oder tellerfederartige Ansätze 6 auf, die in die Kunststoffauskleidung 2 in Richtung Strömungsmitte bis zu einem entsprechenden Abstand von Zu- und Abgangsöffnung 4b, 4c hineinragen. Die Ansätze 6 können zweckmäßig zu ihren Enden hin verjüngt ausgeführt werden. Anstatt der Ansätze 6 können auch praktisch für denselben Zweck Tellerfedern angeordnet werden, die sich mit ihrem großen Durchmesser am Gehäuse 1 bzw. am Ringscheibenelement 3 abstützen oder mit diesem formschlüssig verbunden sind. Auch kann eine Tellerfeder das Ringscheibenelement 3 ganz ersetzen. Die Ansätze b bzw. Tellerfedern können zweckmäßig zur besseren Federung aber auch Verankerung in der Kunststoffauskleidung 2 am freien Ende mit Schlitzen versehen sein. Auch sind zur besseren Verankerung der Kunststoffauskleidung 2 Bohrungen in den Ansätzen 6 zweckmäßig. Die Ansätze 6 bzw. Tellerfedern können so angeordnet sein, daß sie in einem entsprechenden Abstand zur Kugel 4 in etwa parallel zur Mantelfläche der Kugel 4 verlaufen, wie in Fig. 1 zu sehen ist, sie können aber auch entgegengesetzt verlaufen. Ebenso ist es denkbar, daß die federartigen Ansätze 6 geradlinig in Richtung Strömungsmitte bis zu einem entsprechenden Abstand von Zu- und Abgangsöffnung 4b, 4c verlaufen. Am metallischen Gehäuse 1 verbleibt nur eine Flanschdichtfläche 1b von geringer Breite am äußeren Durchmesser. Der restliche Bereich der Flanschdichtfläche ist mit Kunststoff ausgekleidet und bildet die Flanschdichtfläche 2a, die mit dem Überstand 2d geringfügig gegenüber der Flanschdichtfläche 1b vorsteht. Bei der Montage mit Gegenflanschen wird jeweils die überstehende Flanschdichtfläche 2a bzw. der Überstand 2d bis maximal auf die Höhe der Flanschdichtfläche 1b zusammengedrückt. Hierbei wird durch die Ansätze 6 über die Kunststoffauskleidung 2 eine Anpreßkraft und somit Dichtkraft gegenüber der Kugel 4 im Dichtbereich, der sich durchmessermäßig um die Zu- und Abgangsöffnung 4b, 4c gegenüber der Kugel 4 befindet, ausgeübt. Die Anpreßkraft bzw. Dichtkraft ist somit auf den Dichtbereich zwischen Kugel 4 und Zu- und Abgangsöffnung 4b, 4c konzentriert und der übrige, die Kugel 4 umgebende Bereich der Auskleidung 2 liegt lediglich unter der vom Spritz- bzw. Preßvorgang resultierenden Spannung an der Kugel 4 an. Die Ansätze 6 oder Tellerfedern, die mit der Kunststoffauskleidung 2 gut verankert sind, verhindern einerseits das Wegfließen der unter Druck stehenden Kunststoffauskleidung 2 und andererseits bringen sie eine dosierte Anpreßkraft im Dichtbereich über die Kunststoffauskleidung 2 gegenüber der Kugel 4 hervor. Zur besseren Dosierung der Anpreßkraft kann es auch sinnvoll sein, wenn man im Bereich der Flanschdichtfläche 2a eine entsprechend abgestimmte Freisparung vorsieht.

Für die Schaltwelle 5 ist im Gehäuse 1 ein Abgang senkrecht zur Strömungsmitte oder auch in einem anderen Winkel vorgesehen. Gemäß Fig. 1 ist die Kunststoffauskleidung 2 auch entlang des gesamten Abdichtbereiches an der Schaltwelle 5 und an dem entsprechenden Gehäusebereich gegeben. Am entsprechenden Gehäusebereich kann sie aber auch entfallen. Die Kunststoffauskleidung 2 weist jedoch im Abdichtbereich der Schaltwelle eine im Abstand zur Schaltwelle 5 liegende koaxiale Freisparung 2c auf. In diese Freisparung 2c wird ein dauerelastischer Dichtwerkstoff, wie z.B. Reingraphit, eingelegt, der zweckmäßig über einen Deckring 8 mittels z.B. einer Mutter 7 so weit zusammengepreßt wird, bis eine absolute Abdichtung an der Schaltwelle 5 gegeben ist, ohne daß eine Schwergängigkeit eintritt. Zur Aufnahme der hierbei entstehenden Axialkräfte und gleichzeitig zur axialen Sicherung der Schaltwelle 5 gegen Herausdrücken durch den Betriebsdruck aus dem Gehäusekörper weist das Gehäuse 1 zweckmäßig eine in den Abgang für die Schaltwelle 5 hineinragende Schulter 1c auf. Die Schulter 1c liegt innerhalb der Kunststoffauskleidung 2. Selbstverständlich ist es auch denkbar, daß die Kunststoffauskleidung 2 nicht entlang des gesamten Abdichtbereiches der Schaltwelle 5 ausgeführt ist und der Dichtwerkstoff unmittelbar an der Schaltwelle 5 zur Abdichtung angeordnet ist.

Die Fig. 2 zeigt einen Kugelhahn wie Fig. 1, jedoch wurden Gehäuse 1 und das Ringscheibenelement 3 getrennt mit Kunststoff ausgekleidet bzw. ummantelt. Diese Ausführungsart ist insbesondere dann von Vorteil, wenn eine Kugel 4 aus Keramik oder eine mit Fluorkunststoff ummantelte Kugel 4 für den Kugelhahn vorgesehen ist. Auch ist diese Ausführung besonders geeignet, wenn ein Absperrelement als Halbkugel eingesetzt wird. Hierbei ist eine völlig totraumfreie Ausführung im abgesperrten Zustand der Armatur gegeben. Die Montage des Kugelhahns gemäß Fig. 2 erfolgt nach dem Einsetzen der Innenteile durch Einpressen des mit Kunststoff ummantelten Ringscheibenelements 3a in Gehäuse 1e. Das Gehäuse 1e ist einteilig über die Baulänge ausgeführt. Hierbei findet die Kunststoffummantelung des Ringscheibenelementes 3a die zweckmäßig vor der Verpressung eine Erhöhung 2g aufweist, an einer Hinterdrehung 1f der Flanschdichtfläche 1b eine Verankerung und die Kunststoffauskleidung im Gehäuse 1e mit Kunststoffummantelung des Ringscheibenelementes 3a dichten insbesondere radial gegeneinander an ihren unter Pressung stehenden Berührungsflächen ab. Durch die flanschseitige Montage, z.B. als Einklemmarmatur, ist dann die volle axiale Festigkeit für den Kugelhahn gegeben, wobei auch bei dieser Ausführung die Kunststoffauskleidung gleichzeitig die Abdichtung gegenüber der Kugel 4 übernimmt, eine dosierte Anpreßkraft im Abdichtbereich gegenüber der Kugel 4 vorliegt und die Kunststoffauskleidung der Kugel 4 zumindest in Bandbreite des Dichtbereiches in jeder Schaltstellung umschließt.

Die Ausführung nach der Fig. 1, bei der die Kugel 4 mit eingespritzt ist, wird in einem Werkzeug dergestalt ausgekleidet, daß der Durchgang 4a von Kugel 4 mit Zu- und Abgangsöffnung 4b, 4c in einer Achse stehen. Gehäuse, Kugel und Schaltwelle werden achs- und formgerecht im Werkzeug aufgenommen, wobei Durchgang 4a durch Zentrierbolzen gleichzeitig abgedeckt wird, und die nun noch verbleibenden Zwischenräume werden mit Kunststoff ausgespritzt bzw. in einem Preßvorgang ausgefüllt. Hierbei kann auch gleichzeitig die koaxiale Aussparung für die Schaltwellenabdichtung formmäßig fertig gespritzt werden. Da die Kunststoffauskleidung bei diesem Fertigungsvorgang bei der nachfolgenden Abkühlung von der inneren Wandung auf den Kern schrumpft, d.h. vom Gehäuse weg auf die Kugel bzw. die Schaltwelle schrumpft, ist im erkalteten Zustand eine Drehbewegung für die Gängigkeit erforderlich. Danach lastet nur noch die aus dem Spritzvorgang resultierende Eigenspannung der Auskleidung auf Kugel und Schaltwelle, ohne zu hohe Reibwiderstände hervorzurufen. Die zusätzlichen Abdichtkräfte für Zu- und Abgang gegenüber der Kugel treten dann nach der Montage im Dichtbereich wie bereits beschrieben ein.

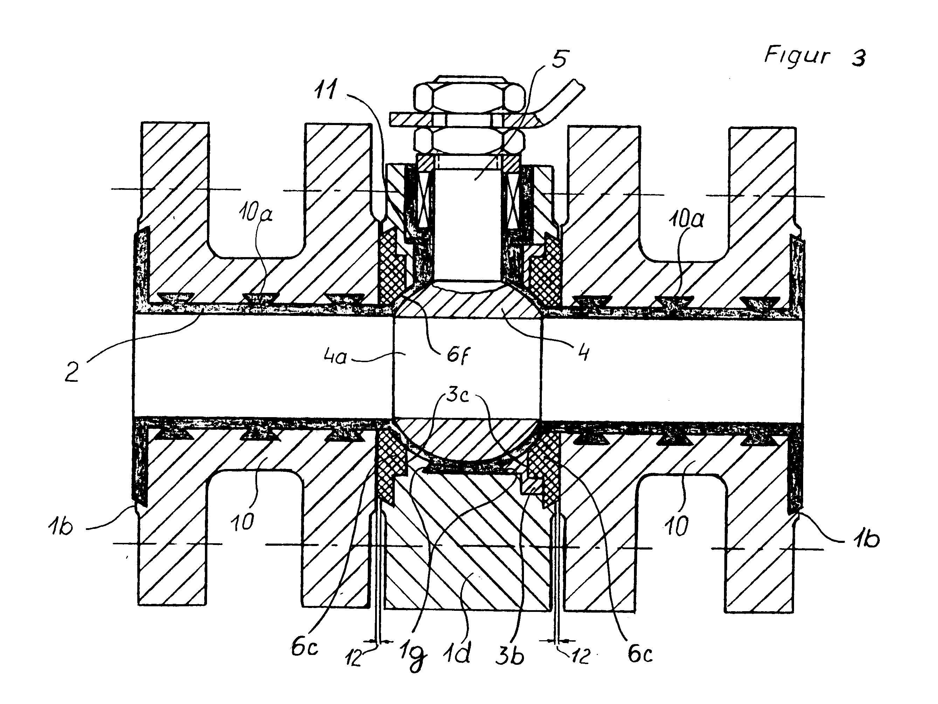

Die Fig. 3 zeigt einen Kugelhahn in einem 3-teiligen Gehäuse, bestehend aus Gehäusemittelteil 1d und zwei Anbauteilen 10, wobei die Gehäuseteile über die Kunststoffauskleidung 2 zu einer Einheit verbunden sind. Hierbei erstreckt sich die Kunststoffauskleidung 2 auch über die äußeren Flanschdichtflächen der Anbauteile 10 bis zu der verbleibenden Flanschdichtfläche 1b. Im Gehäusemittelteil 1d ist die Kugel 4 und ein Ringscheibenelement 3b angeordnet. Dieses Ringscheibenelement 3b wird nach dem Einsetzen der Kugel 4 in das Gehäusemittelteil 1d eingelegt und bildet eine Schulter 3c, analog der gegenüberliegenden Schulter 3c im Gehäusemittelteil 1d, an denen sich die komprimierbaren, elastischen Werkstoffeinlagen 6c zum Teil abstützen. Das Gehäusemittelteil 1d wird, nachdem es mit den Werkstoffeinlagen 6c versehen ist, mit den Anbauteilen 10 komplettiert. Das Gehäusemittelteil 1d wird mit den Anbauteilen 10 über Schrauben oder ähnliches so weit verspannt, daß zwischen den Flanschdichtflächen noch ein Spalt 12 verbleibt. Sofern erforderlich, kann der Spalt 12 bis zur Fertigstellung der Armatur hilfsweise mit Distanzblechen versehen werden. Die hierbei erreichte Vorspannung gewährleistet bereits eine Dichtheit zwischen den Flanschdichtflächen dergestalt, daß beim nachfolgenden Spritz- bzw. Preßvorgang die Kunststoffauskleidung 2 nicht oder kaum zwischen das Gehäusemittelteil 1d und die Anbauteile 10 eindringt. Für die Kunststoffauskleidung 2 ist es zweckmäßig, daß sie in den Anbauteilen 10 und möglichst auch im Gehäusemittelteil 1d schwalbenschwanzförmige Verankerungen 10a/1g erhält. Über die Verankerung 1g wird erreicht, daß einerseits die Scherkräfte beim Schaltvorgang besser abgefangen werden, und weiterhin wird verhindert, daß die Kunststoffauskleidung 2 nach dem Spritz- oder Preßvorgang zu stark auf die Kugel 4 schrumpft. Die Kugel 4 wird zweckmäßig auch vor dem Spritz- oder Preßvorgang mit einem Trennmittel versehen. Weiterhin kann es sinnvoll sein, daß im Gehäusemittelteil 1d anstatt einer Schulter 1c eine möglichst weit zur Schaltwelle 5 reichende Druckscheibe 11 in die Kunststoffauskleidung 2 eingebettet wird, um die axialen Kräfte, die sich aus der Abdichtung der Schaltwelle 5 ergeben, abzufangen. Zur weiteren Verankerung der Kunststoffauskleidung 2 und zur Unterbindung bzw. Reduzierung des Kaltflusses ist es zweckmäßig, wenn die Werkstoffeinlagen 6c jeweils an der zur Kugel 4 gerichteten Seite 6f eine oder mehrere möglichst konzentrisch zum Durchgang 4a der Kugel 4 angeordnete Rillen bzw. Nuten aufweisen. Rillen oder Nuten können natürlich auch im übrigen Bereich zwischen den Werkstoffeinlagen 6c und der Kunststoffauskleidung 2 vorgesehen werden.

Nach dem Spritz- bzw. Preßvorgang erfolgt eine weitere Verspannung mittels der vorgesehenen Schrauben oder ähnlichem, bis die Flanschdichtflächen von dem Gehäusemittelteil 1d und den Anbauteilen 10 zur Anlage kommen und der Spalt 12 somit entfällt. Hierdurch wird über die Werkstoffeinlage 6c eine dosierte Anpreßkraft und somit Abdichtung gegenüber der Kugel 4 erreicht. In diesem Zustand wäre dann bei Bedarf auch eine Verschweißung zwischen dem Gehäusemittelteil 1d und den Anbauteilen 10 denkbar. Da der Spalt 12 nur ein geringes Maß einnimmt, tritt bei der restlichen Verspannung kein Nachteil auf, insbesondere auch deshalb nicht, da die Kunststoffauskleidung 2 in den Anbauteilen 10 verankert ist. Die Ausführung gemäß der Fig. 3 wäre selbstverständlich auch in einem zweiteiligen Gehäuse möglich.

Kugel 4 mit Schaltwelle 5 können jeweils entweder aus einem Stück gefertigt oder auch zweiteilig ausgeführt sein. Die Kugel 4 kann auch noch einen unteren Lagerzapfen aufweisen. Bei der zweiteiligen Ausführung ist für die Kupplung beider Teile Nut und Feder ebenso möglich wie z.B. eine Kerbverzahnung oder eine sonstige dem Zweck dienende Verbindung. Das Absperrelement kann aus Metall, Keramik oder aus einem sonstigen Werkstoff bestehen. Es kann auch jeweils mit Kunststoff oder einem sonstigen geeigneten Werkstoff ummantelt sein. Für die Kunststoffauskleidung ist jeweils ein Werkstoff vorgesehen, der neben guter Korrosionsbeständigkeit und Gleiteigenschaft auch gut gegen Verschleiß geeignet ist. Insbesondere die Fluorkunststoffe sind hierfür bsonders geeignet, da sie zusätzlich auch noch Antihafteigenschaften aufweisen. Aber auch andere geeignete Kunststoffe können dafür herangezogen werden. Für die komprimierbare, elastische Werkstoffeinlage ist insbesondere Reingraphit wegen seiner hohen Temperaturbeständigkeit, seiner guten chemischen Beständigkeit und Dauerelastizität vorgesehen. Aber auch IT-Qualitäten bzw. Kautschuk/Asbestqualitäten oder ähnliche Werkstoffe können dafür vorgesehen werden.

Alle hier aufgezeigten Ausführungen zeigen einen Kugelhahn als Baueinheit mit Kunststoffauskleidung, bei dem die Kunststoffauskleidung gleichzeitig die Dichtfunktion gegenüber der Kugel übernimmt. Ebenso ist eine dosierte Anpreßkraft der Kunststoffauskleidung im Dichtbereich gegenüber der Kugel im eingebauten Zustand gegeben, und die Kunststoffauskleidung umschließt anliegend ganz oder zumindest in etwa in Bandbreite des Dichtbereichs in jeder Schaltstellung die periphere Oberfläche des zentrisch drehbar angeordneten Absperrelements.

Das die Kugel beinhaltende Gehäuse stellt eine einteilige Einheit zum Einbau in z.B. eine Rohrleitung dar, und auch für die Schaltwellenabdichtung ist eine völlig totraumfreie Ausführung aufgezeigt. Durch entsprechende Anbauteile kann diese Einheit zu jeder anderen Baulänge, Anschlußart oder Ausführungsart erweitert werden.

Bezugszeichenliste

| 1 | Gehäuse |
| 1a | Gehäuseschulter |
| 1b | Flanschdichtfläche |
| 1c | Schulter |
| 1d | Gehäusemittelteil |
| 1e | Gehäuse |
| 1f | Hinterdrehung |
| 1g | Verankerung |
| 2 | Kunststoffauskleidung |
| 2a | Flanschdichtfläche |
| 2c | koaxiale Freisparung |
| 2d | Überstand |
| 2g | Erhöhung |
| 3, 3a, 3b | Ringscheibenelement |
| 3c | Schulter |
| 4 | Kugel |
| 4a | Durchgang |
| 4b | Zugangsöffnung |
| 4c | Abgangsöffnung |
| 5 | Schaltwelle |
| 6 | Ansatz |
| 6c | Werkstoffeinlage |
| 6f | Seite |
| 7 | Mutter |
| 8 | Deckring |
| 10 | Anbau |
| 10a | Verankerung |
| 11 | Druckscheibe |
| 12 | Spalt |

**Patentansprüche**

1. Kugelhahn mit kunststoffausgekleidetem Gehäuse (1, 1d), wobei die Kunststoffauskleidung (2) zumindest in etwa in Bandbreite des Dichtbereiches die zentrisch drehbar angeordnete, mit einer Schaltwelle (5) verbundene Kugel (4) des Kugelhahns in jeder Schaltstellung federkraftunterstützt an deren peripheren Oberfläche umschließt und gleichzeitig als Dichtung gegenüber der Kugel (4) dient, sowie das federkraftausübende Element durch die Kunststoffauskleidung (2) abgedeckt ist, **dadurch gekennzeichnet,** daß das die Kugel (4) mit Schaltwelle (5) beinhaltende einteilige Gehäuse (1, 1d) eine offene Seite aufweist, die nach dem Einsetzen der Kugel (4) mit Schaltwelle (5) mit einem Ringscheibenelement (3, 3b) abgedeckt wird daß Gehäuse (1, 1d), Ringscheibenelement (3, 3b) und Kugel (4) mit Schaltwelle (5) über die eingespritze oder eingepreßte Kunststoffauskleidung (2) zu einer Einheit verbunden sind, wobei die Kunststoffauskleidung (2) zusätzlich zur peripheren Oberfläche der Kugel (4) auch den im Gehäuse eingeschlossenen Teil der Schaltwelle (5) anliegend umschließt, und daß der mit Kunststoff ausgekleidete Gehäusekörper eine Zu- und Abgangsöffnung (4b, 4c) aufweist.

2. Kugelhahn mit kunststoffausgekleidetem Gehäuse (1e), wobei die Kunststoffauskleidung (2) zumindest in etwa in Bandbreite des Dichtbereiches die zentrisch drehbar angeordnete, mit einer Schaltwelle (5) Verbundene Kugel (4) des Kugelhahns in jeder Schaltstellung federkraftunterstützt an deren peripheren Oberfläche umschließt und gleichzeitig als Dichtung gegenüber der Kugel (4) dient, sowie das federkraftausübende Element durch die Kunststoffauskleidung (2) abgedeckt ist, **dadurch gekennzeichnet,** daß das die Kugel (4) mit Schaltwelle (5) beinhaltende einteilige Gehäuse (1e) eine offene Seite aufweist, die nach dem Einsetzen der Kugel (4) mit Schaltwelle (5) durch ein Ringscheibenelement (3a) abgedeckt wird, wobei das Gehäuse (1e) und das Ringscheibenelement (3a) getrennt mit Kunststoff ausgekleidet sind und in montiertem Zustand die Kunststoffauskleidung (2) zusätzlich zur peripheren Oberfläche der Kugel (4) auch den im Gehäuse eingeschlossenen Teil der Schaltwelle (5) anliegend umschließt, und daß der Gehäusekörper eine Zu- und Abgangsöffnung aufweist.

3. Kugelhahn nach Anspruch 1 oder 2, **dadurch gekennzeichnet,** daß das Ringscheibenelement (3, 3a, 3b) das als ringfederartige Ansätze (6) ausgebildete federkraftausübende Element aufweist, wobei die ringfederartigen Ansätze (6) beabstandet zur Kugel (4) und zur Zu- bzw. Abgangsöffnung (4b, 4c) des Gehäuses (1, 1d, 1e) in Richtung Strömungsmitte in die Kunststoffauskleidung (2) hineinragen.

4. Kugelhahn nach Anspruch 3, **dadurch gekennzeichnet,** daß auch das Gehäuse (1, 1d, 1e) als ringfederartige Ansätze (6) ausgebildete federkraftausübende Elemente aufweist, wobei die ringfederartigen Ansätze (6) beabstandet zur Kugel (4) und zur Zu- bzw. Abgangsöffnung (4b, 4c) des Gehäuses (1, 1d, 1e) in Richtung Strömungsmitte in die Kunststoffauskleidung (2) hineinragen.

5. Kugelhahn nach Anspruch 1 oder 2, **dadurch gekennzeichnet,** daß das federkraftausübende Element als Tellerfeder ausgebildet ist, die sich am Gehäuse (1) mit dem äußeren Durchmesser abstützt und beabstandet zur Kugel (4) und zur Zu- bzw. Abgangsöffnung (4b, 4c) des Gehäuses (1) in Richtung Strömungsmitte in die Kunststoffauskleidung (2) hineinragt.

6. Kugelhahn nach Anspruch 1 oder 2, **dadurch gekennzeichnet,** daß das federkraftausübende Element als komprimierbare, elastische Werkstoffeinlage (6c) ausgebildet ist, die in die Kunststoffauskleidung (2) eingebettet ist.

7. Kugelhahn nach Anspruch 6, **dadurch gekennzeichnet,** daß die Werkstoffeinlage (6c) zwischen Gehäuse (1, 1d, 1e) bzw. Ringscheibenelement (3, 3a, 3b) und Kunststoffauskleidung (2) eingebettet ist.

8. Kugelhahn nach Anspruch 6 oder 7, **dadurch gekennzeichnet,** daß die komprimierbare, elastische Werkstoffeinlage (6c) vom Dichtbereich gegenüber der Kugel (4) bis etwa zum äußeren Durchmesser der Flanschdichtfläche (2a) der Kunststoffauskleidung (2) reicht.

9. Kugelhahn nach einem der Ansprüche 6 bis 8, **dadurch gekennzeichnet,** daß die komprimierbare, elastische Werkstoffeinlage nur in etwa im Dichtbereich gegenüber der Kugel (4) angeordnet ist.

10. Kugelhahn nach einem der Ansprüche 6 bis 9, **dadurch gekennzeichnet,** daß die komprimierbare, elastische Werkstoffeinlage (6c) aus Reingraphit oder Kautschuk/Asbest oder ähnlich geeignetem Werkstoff besteht.

11. Kugelhahn nach einem der Ansprüche 6 bis 10, **dadurch gekennzeichnet,** daß die komprimierbare, elastische Werkstoffeinlage (6c) an der zur Kugel (4) gerichteten Seite (6f) eine oder mehrere konzentrisch zum Durchgang (4) der Kugel (4) angeordnete Rillen bzw. Nuten aufweist.

12. Kugelhahn nach einem der Ansprüche 1 bis 11, **dadurch gekennzeichnet,** daß die Flanschdichtfläche (2a) der Kunststoffauskleidung (2) zur Flanschdichtfläche (1b) des Gehäuses (1) einen Überstand (2d) aufweist.

13. Kugelhahn nach einem der Ansprüche 1 bis 12, **dadurch gekennzeichnet,** daß die Flanschdichtfläche (2a) eine Freisparung aufweist.

14. Kugelhahn nach einem der Ansprüche 1 bis 13, **dadurch gekennzeichnet,** daß die Kunststoffauskleidung (2) an der zur Kugel (4) gerichteten Seite im Bereich der Abdichtung der Kugel (4) einen Überstand aufweist.

15. Kugelhahn nach einem der Ansprüche 1 bis 14, **dadurch gekennzeichnet,** daß im Gehäuse (1) in den für die Schaltwelle (5) vorgesehenen Abgang eine Schulter (1c) in die Kunststoffauskleidung (2) hineinragt.

16. Kugelhahn nach einem der Ansprüche 1 bis 15, **dadurch gekennzeichnet,** daß die Kunststoffauskleidung (2) im Dichtbereich der Schaltwelle (5) eine koaxial in einem entsprechenden Abstand zur Schaltwelle (5) liegende Freisparung (2c) aufweist.

17. Kugelhahn nach einem der Ansprüche 1 bis 16, **dadurch gekennzeichnet,** daß die Kunststoffauskleidung (2) im Dichtbereich der Schaltwelle (5) an der Schaltwelle (5) anliegt und über einen Dichtwerkstoff an die Schaltwelle (5) zur Abdichtung angedrückt wird.

18. Kugelhahn nach einem der Ansprüche 1 bis 17, **dadurch gekennzeichnet,** daß die Kunststoffauskleidung (2) zumindest an einer Seite an der Zu- und/oder Abgangsöffnung (4b, 4c) eine rohrförmige Verlängerung aufweist.

19. Kugelhahn nach Anspruch 18, **dadurch gekennzeichnet,** daß der Kugelhahn als Einheit, insbesondere über die rohrförmige Verlängerung, mit Anbauteilen zu beliebiger Baulänge, Anschlußart oder Ausführungsart erweitert werden kann.

20. Kugelhahn nach einem der Ansprüche 1 bis 19, **dadurch gekennzeichnet,** daß die Kunststoffauskleidung (2) aus einem Fluorkunststoff besteht.

21. Kugelhahn nach einem der Ansprüche 1 bis 20, **dadurch gekennzeichnet,** daß die Kugel (4) mit Schaltwelle (5) einteilig ausgeführt ist und aus Metall, vorzugsweise Edelstahl, Keramik oder Metall mit Kunststoff, vorzugsweise einem Fluorkunststoff ummantelt, besteht.

22. Kugelhahn nach einem der Ansprüche 1 bis 20, **dadurch gekennzeichnet,** daß die Kugel (4) mit Schaltwelle zweiteilig ausgeführt und über zum Beispiel Nut und Feder oder ähnlich miteinander gekuppelt bzw. verbunden sind.

23. Kugelhahn nach Anspruch 22, **dadurch gekennzeichnet,** daß die Kugel (4) aus Metall, vorzugsweise Edelstahl, Keramik oder Metall mit Kunststoff, vorzugsweise einem Fluorkunststoff ummantelt, besteht.

24. Kugelhahn nach einem der Ansprüche 1 bis 23, **dadurch gekennzeichnet,** daß der Kugelhahn als Einheit mit Anbauteil(en) (10) inklusive der außenliegenden Flanschdichtfläche(n) des/der Anbauteil(e) (10) bis zu der jeweils verbleibenden Flanschdichtfläche (1b) eine durchgehende Kunststoffauskleidung (2) aufweist.

25. Kugelhahn nach einem der Ansprüche 1 bis 24, **dadurch gekennzeichnet,** daß die Kunststoffauskleidung (2) mit dem Gehäuse (1d) zusammenwirkende schwalbenschwanzförmige Verankerungen (1g) aufweist.

26. Kugelhahn nach einem der Ansprüche 6 bis 25, **dadurch gekennzeichnet,** daß die Werkstoffeinlage gegen den Spritzvorgang metallisch abgeschirmt oder verfestigt ist.

27. Kugelhahn nach einem der Ansprüche 1 bis 26, **dadurch gekennzeichnet,** daß eine Druckscheibe (11) in der Kunststoffauskleidung (2) im Bereich der Schaltwelle (5) angeordnet ist.

28. Kugelhahn nach einem der Ansprüche 1 bis 27, **dadurch gekennzeichnet,** daß sich das Ringscheibenelement (3, 3a, 3b) an einer Gehäuseschulter (1a) Metall gegen Metall abstützt.

**Claims**

1. Ball valve with plastic-lined casing (1, 1d), wherein in each control position the plastic lining (2) at least for more or less the width of the sealing area, surrounds the hall valve hall (4) which is arranged so as to be rotatable centrically and is joined to a control shaft (5) and is supported by spring force on the peripheral surface, and said plastic lining at the same time acts as a seal with respect to the ball (4), and wherein the member exerting the spring force is covered by the plastic lining (2), characterised in that the one-piece casing (1, 1d) containing the hall (4) with control shaft (5) has one open side which, after introduction of the ball (4) and control shaft (5), is covered with an annular disc member (3, 3b) that the casing (1, 1d), the annular disc member (3, 3b) and the hall (4) with its control shaft (5) are joined in a unit by means of the plastic lining (2), which is injected or pressed into place, the plastic lining (2) also surrounding and touching, in addition to the peripheral surface of the ball (4), that part of the control shaft (5) included in the casing, and that the casing body lined with plastic has an inlet and outlet opening (4b, 4c).

2. Ball valve with plastic-lined casing (1e), wherein in each control position the plastic lining (2) at least for more or less the width of the sealing area surrounds the ball valve ball (4) which is arranged so as to be rotatable centrically and is joined to a control shaft (5) and is supported by spring force on the peripheral surface, and said plastic lining at the same time acts as a seal with respect to the ball (4), and wherein the member exerting the spring force is covered by the plastic lining (2), characterised in that the one-piece casing (1e) containing the ball (4) with control shaft (5) has one open side which, after introduction of the ball (4) and control shaft (5), is covered by an annular disc member (3a), the casing (1e) and the annular disc member (3a) being separately lined with plastic and in the assembled state the plastic lining (2) also surrounding and touching, in addition to the peripheral surface of the ball (4), that part of the control shaft (5) included in the casing, and that the casing body incorporates an inlet and outlet opening.

3. Ball valve according to claim 1 or 2, characterised in that the annular disc member (3, 3a, 3b) incorporates the member that exerts spring force in the form of annular spring-type shoulders (6), the annular spring-type shoulders (6) projecting, at a distance from the ball (4) and from the inlet and outlet opening (4b, 4c) of the casing (1, 1d, 1e), into the plastic lining (2) in the direction of the centre of flow.

4. Ball valve according to claim 3, characterised in that the casing (1, 1d, 1e) too incorporates members exerting spring force in the form of annular spring-type shoulders (6), said annular spring-type shoulders (6) projecting, at a distance from the ball (4) and from the inlet and outlet opening (4b, 4c) of the casing (1, 1d, 1e), into the plastic lining (2) in the direction of the centre of flow.

5. Ball valve according to claim 1 or 2, characterised in that the member exerting spring force is in the form of a disc spring supported on the casing (1) by its external diameter and projecting, at a distance from the ball (4) and from the inlet and outlet opening (4b, 4c) of the casing (1), into the plastic lining (2) in the direction of the centre of flow.

6. Ball valve according to claim 1 or 2, characterised in that the member exerting spring force is in the form of a compressible, elastic material insert (6c) embedded into the plastic lining (2).

7. Ball valve according to claim 6, characterised in that the material insert (6c) is embedded between the casing (1, 1d, 1e), or the annular disc member (3, 3a, 3b), and the plastic lining (2).

8. Ball valve according to claim 6 or 7, characterised in that the compressible, elastic material insert (6c) extends from the sealing area relative to the ball (4) more or less as far as the external diameter of the flange sealing surface (2a) of the plastic lining (2).

9. Ball valve according to one of claims 6 to 8, characterised in that the compressible, elastic material insert is only disposed more or less in the sealing area relative to the ball (4).

10. Ball valve according to one of claims 6 to 9, characterised in that the compressible, elastic material insert (6c) consists of pure graphite or rubber/asbestos or similar suitable material.

11. Ball valve according to one of claims 6 to 10, characterised in that on the side (6f) facing the ball (4) the compressible, elastic material insert (6c) exhibits one or more channels or grooves arranged concentric to the passage (4a) of the ball (4).

12. Ball valve according to one of claims 1 to 11, characterised in that the flange sealing surface (2a) of the plastic lining (2) exhibits a projecting end (2d) to the flange sealing surface (1b) of the casing (1).

13. Ball valve according to one of claims 1 to 12, characterised in that the flange sealing surface (2a) incorporates a recess.

14. Ball valve according to one of claims 1 to 13, characterised in that on the side facing the ball (4) the plastic lining (2) has a projecting end near where the ball (4) is sealed.

15. Ball valve according to one of claims 1 to 14, characterised in that in the casing (1) a shoulder (1c) projects into the plastic lining (2) into the outlet provided for the control shaft (5).

16. Ball valve according to one of claims 1 to 15, characterised in that in the sealing area of the control shaft (5) the plastic lining (2) incorporates a recess (2c) situated coaxially at a corresponding distance from the control shaft (5)

17. Ball valve according to one of claims 1 to 16, characterised in that the plastic lining (2) touches the control shaft (5) in the sealing area of the control shaft (5) and to make the seal is pressed against the control shaft (5) by the agency of a sealing material.

18. Ball valve according to one of claims 1 to 17, characterised in that at least on one side the plastic lining (2) exhibits a tubular extension on the inlet and/or outlet opening (4b, 4c).

19. Ball valve according to claim 18, characterised in that the ball valve can he expanded as a unit, particularly by means of the tubular extension, with add-on parts to provide any desired overall length, type of fitting or type of design.

20. Ball valve according to one of claims 1 to 19, characterised in that the plastic lining (2) consists of a fluoropolymer.

21. Ball valve according to one of claims 1 to 20, characterised in that the ball (4) is constructed integrally with the control shaft (5) and consists of metal, preferably stainless steel, ceramic or metal encased with plastic, preferably a fluoropolymer.

22. Ball valve according to one of claims 1 to 20, characterised in that the ball (4) and control shaft are constructed in two pieces coupled or joined together by for example a groove and spring or similar means.

23. Ball valve according to claim 22, characterised in that the hall (4) consists of metal, preferably stainless steel, ceramic or metal encased with plastic, preferably a fluoropolymer.

24. Ball valve according to one of claims 1 to 23, characterised in that the ball valve as a unit with add-on part(s) (10) inclusive of the outlying flange sealing face(s) of the add-on part(s) (10) exhibits a continuous plastic lining (2) as far as the respective remaining flange sealing face (1b).

25. Ball valve according to one of claims 1 to 24, characterised in that the plastic lining (2) incorporates dovetailed anchoring means (1g) which cooperate with the casing (1d).

26. Ball valve according to one of claims 6 to 25, characterised in that the material insert is metallically shielded or packed to protect it from the injection process.

27. Ball valve according to one of claims 1 to 26, characterised in that a pressure disc (11) is arranged in the plastic lining (2) in the region of the control shaft (5).

28. Ball valve according to one of claims 1 to 27, characterised in that the annular disc member (3, 3a, 3b) rests metal against metal on a casing shoulder (1a).

## Revendications

1. Robinet à boule comprenant un boîtier (1, 1d) muni d'un revêtement de matière plastique (2), au moins sensiblement sur une bande de la zone d'étanchéité, entourant la boule, susceptible de tourner sur son centre, reliée à l'axe de commande (5) et qui, dans chaque position de commande, est appliquée par une pression élastique sur sa surface périphérique et qui sert en même temps de moyen d'étanchéité vis-à-vis de la boule (4), l'élément exerçant la pression élastique étant recouvert par le revêtement de matière plastique (2), caractérisé en ce que le boîtier (1, 1d) en une seule pièce, recevant la boule (4) avec l'axe de commande (5) comporte un côté ouvert qui, après la mise en place de la boule (4) et l'axe de commande (5), est obturé par un élément en forme de disque annulaire (3, 3b), en ce que le boîtier (1, 1d), l'élément annulaire (3, 3b), la boule (4) avec son axe de commande (5) sont réunis en un seul ensemble par le revêtement en matière plastique (2) réalisé par injection ou moulage sous pression, de sorte que le revêtement (2) en matière plastique recouvre, en plus de la surface périphérique de la boule (4) également la partie de l'axe de commande située dans le boîtier, et que le corps du boîtier revêtu de matière plastique présente un orifice d'entrée et un orifice de sortie (4b, 4c).

2. Robinet à boule comprenant un boîtier (le) revêtu de matière plastique, le revêtement en matière plastique (2), au moins sensiblement sur une bande de la zone d'étanchéité entourant la boule susceptible de tourner sur son centre, reliée à l'axe de commande (5) et qui, dans chaque position de commande, est appliquée par une pression élastique sur sa surface périphérique et qui sert en même temps de moyen d'étanchéité vis-à-vis de la boule (4), l'élément exerçant la pression élastique étant recouvert par le revêtement de matière plastique (2), caractérisé en ce que le boîtier (1e) en une seule pièce, recevant la boule (4) avec l'axe de commande (5) comporte un côté ouvert qui, après la mise en place de la boule (4) et l'axe de commande (5), est obturé par un élément en forme de disque annulaire (3a), le boîtier (1e) et l'élément annulaire (3a) sont séparément revêtus de matière plastique et, à l'état monté, le revêtement en matière plastique (2) entoure, en plus de la surface périphérique de la boule (4), également la partie de l'axe de commande (5) située dans le boîtier, et que le corps du boîtier présente un orifice d'entrée et un orifice de sortie.

3. Robinet à boule selon la revendication 1 ou 2, caractérisé en ce que l'élément en forme de disque annulaire (3, 3a, 3b) comporte un élément exerçant une force élastique constituée d'appendices (6) en forme d'anneaux élastiques, ces appendices (6) faisant saillie dans le revêtement en matière plastique (2), en direction du centre de l'écoulement du fluide, à une certaine distance de la boule (4) et de l'orifice d'entrée et de sortie (4b, 4c) du boîtier (1, 1d, 1e).

4. Robinet à boule selon la revendication 3, caractérisé en ce que le boîtier (1, 1d, 1e) comporte également une partie exerçant une force élastique, constituée d'appendices (6) en forme d'anneaux élastiques, ces appendices faisant saillie dans le revêtement en matière plastique (2), en direction de l'axe de l'écoulement du fluide, à une certaine distance de la boule (4) et des orifices d'entrée et de sortie (4b, 4c) du boîtier (1, 1d, 1e).

5. Robinet à boule selon la revendication 1 ou 2, caractérisé en ce que la partie exerçant une force élastique est constituée par une rondelle Belleville qui s'appuie par son diamètre extérieur du boîtier (1) et faisant saillie dans le revêtement en matière plastique (2) en direction du centre de l'écoulement du fluide, à une certaine distance de la boule (4) et par rapport aux orifices d'entrée et de sortie (4b, 4c) du boîtier (1, 1d, 1e).

6. Robinet à boule selon la revendication 1 ou 2, caractérisé en ce que la partie exerçant une force élastique est constituée par un insert (6c) en matériau élastique compressible, noyé dans le revêtement en matière plastique (2).

7. Robinet à boule selon la revendication 6, caractérisé en ce que l'insert (6c) est inséré entre le boîtier (1, 1d, 1e) ou l'élément du disque annulaire (3, 3a, 3b) et le revêtement en matière plastique (2).

8. Robinet à boule selon la revendication 6 ou 7, caractérisé en ce que l'insert élastique compressible (6c) s'étend de la zone d'étanchéité par rapport à la boule (4) jusqu'à proximité du diamètre extérieur de la surface d'étanchéité de la bride (2a) du revêtement en matière plastique (2).

9. Robinet à boule selon l'une des revendications 4 à 6, caractérisé en ce que l'insert en matériau élastique compressible n'est disposé que dans la zone d'étanchéité de la boule (4).

10. Robinet à boule selon l'une des revendications 4 à 7, caractérisé en ce que le matériau élastique compressible de l'insert (6c) est du graphite pur, du caoutchouc/amiante ou autre matière appropriée.

11. Robinet à boule selon l'une des revendications 6 à 10, caractérisé en ce que l'insert (6c) élastique compressible est muni, sur son côté (6f) aligné par rapport à la boule (4) d'une ou plusieurs rainures ou gorges concentriques au passage de la boule (4).

12. Robinet à boule selon l'une des revendications 1 à 11, caractérisé en ce que la surface d'étanchéité de la bride (2a) du revêtement en matière plastique (2) présente un porte-à-faux par rapport à la surface d'étanchéité de bride (1b) du boîtier (1).

13. Robinet à boule selon l'une des revendications 1 à 12, caractérisé en ce que la surface d'étanchéité de bride (2a) comporte un évidement.

14. Robinet à boule selon l'une des revendications 1 à 13, caractérisé en ce que le revêtement en matière plastique (2), sur son côté en regard de la boule (4) présente un porte-à-faux de revêtement de la boule (4).

15. Robinet à boule selon l'une des revendications 1 à 14, caractérisé en ce que dans le boîtier (1) à l'intérieur du passage réservé à l'axe de commande (5), un épaulement (1c) pénètre dans le revêtement en matière plastique (2).

16. Robinet à boule selon l'une des revendications 1 à 15, caractérisé en ce que le revêtement en matière plastique (2), présente, dans la zone d'étanchéité de l'arbre de manoeuvre (5), un évidement (2c) coaxial dans un intervalle correspondant à l'axe de commande (5).

17. Robinet à boule selon l'une des revendications 1 à 16, caractérisé en ce que le revêtement en matière plastique (2) dans la zone d'étanchéité de l'axe de commande (5) est en contact avec lui, et par l'intermédiaire d'un matériau d'étanchéité, il est serré par pression pour assurer l'étanchéité.

18. Robinet à boule selon l'une des revendications 1 à 17, caractérisé en ce que le revêtement en matière plastique (2) au moins sur un côté d'un orifice d'entrée et/ou de sortie (4b, 4c) présente un prolongement tubulaire.

19. Robinet à boule selon la revendication 18, caractérisé en ce que le robinet à boule en tant qu'unité, peut être étendu par adjonction de pièces de longueur, de type quelconque de construction et de raccordement, en particulier par l'intermédiaire de son prolongement tubulaire.

20. Robinet à boule selon l'une des revendications 1 à 19, caractérisé en ce que le revêtement (2) est en matière plastique fluorée.

21. Robinet à boule selon l'une des revendications 1 à 20, caractérisé en ce que la boule (4) et son axe de commande (5) ne font qu'une pièce réalisée en métal, de préférence de l'acier inoxydable, en céramique ou en métal revêtu de matière plastique, fluorée de préférence.

22. Robinet à boule selon l'une des revendications 1 à 20, caractérisé en ce que la boule (4) et son axe de commande constituent deux pièces, accouplées c'est-à-dire reliées par languette et rainure, par exemple, ou autre mode analogue.

23. Robinet à boule selon la revendication 22, caractérisé en ce que la boule (4) est réalisé en métal, de préférence de l'acier inoxydable, en céramique ou en métal revêtu de matière plastique, fluorée de préférence.

24. Robinet à boule selon l'une des revendications 1 à 23, caractérisé en ce que le robinet à boule constitué par l'ensemble du robinet lui-même et d'éléments raccordés (10) y compris leurs surfaces d'étanchéité de bride, présente un revêtement en matière plastique (2) continu s'étendant jusqu'aux surfaces d'étanchéité de bride (1b) restant apparentes.

25. Robinet à boule selon l'une des revendications 1 à 24, caractérisé en ce que le revêtement en matière plastique (2) comporte des ancrages en queue d'aronde (1d), logés dans le boîtier (1).

**26.** Robinet à boule selon l'une des revendications 6 à 25, caractérisé en ce que l'insert est protégé contre les effets de l'injection, ou renforcée, par des éléments métalliques.

**27.** Robinet à boule selon l'une des revendications 1 à 26, caractérisé en ce qu'un disque de pression (11) est disposé à l'intérieur du revêtement en matière plastique (2), dans la zone de l'axe de commande (5).

**28.** Robinet à boule selon l'une des revendications 1 à 27, caractérisé en ce que l'élément à disque annulaire (3, 3a, 3b) s'appuie, métal contre métal, sur un épaulement (1a) du boîtier.

Figur 1

Figur 2

Figur 3